Europäisches Patentamt

European Patent Office

Office européen des brevets

(11) Publication number: **0 420 324 A2**

# EUROPEAN PATENT APPLICATION

(21) Application number: 90202483.5

(22) Date of filing: 19.09.90

(51) Int. Cl.⁵: **A47J 27/09**

(30) Priority: 29.09.89 IT 2188089

(43) Date of publication of application:
03.04.91 Bulletin 91/14

(84) Designated Contracting States:
AT BE CH DE DK ES FR GB GR IT LI LU NL SE

(71) Applicant: **AETERNUM S.r.l.**
**Via Ragazzi del 99, N. 9**
**I-25067 Lumezzane Sant'Apollonio,**
**Brescia(IT)**

(72) Inventor: **Beluzzi Giancarlo**
**Via Parti Sera- Strada 2/A No. 2**
**I-25016 Ghedi (Brescia)(IT)**

(74) Representative: **De Carli, Erberto et al**
**ING. BARZANO' & ZANARDO MILANO S.p.A.**
**Via Borgonuovo, 10**
**I-20121 Milano(IT)**

(54) **Operating valve for pressure cookers.**

(57) The operating valve for pressure cookers operates with a constant weight, anyway making it possible the pressure, and consequently the inner temperature of the cooker pressure, to be varied as a function of the requirements.

Fig.1

## OPERATING VALVE FOR PRESSURE COOKERS

The present invention relates to an operating valve for pressure cookers.

The pressure cookers comprise a tightly sealed container with an operating valve on their top side.

The operating valve makes it possible the value of the pressure inside the pressure cooker to be kept lower than a determined limit value, which is anyway higher than atmospheric pressure, in order to make it possible temperatures to be reached inside the pressure cooker, which are higher than as reached by a normal pot operating under atmospheric pressure.

In fact, it is well-known that the higher the pressure value established inside the pot, the higher the temperature which can be reached by the cooking liquid before said cooking liquid evaporates, and therefore the shorter the time required in order to cook food.

The operating valves presently known in the art can be substantilly reconducted to two types, as a function of the principle according to which they operate.

A first type is the "constant-weight" type; the second type is the "elastic-load" one. The operating valves of the "constant-weight" type are normally closed due to the effect of a massive element, which keeps the shutter pressed against the relevant shutting seating. In the valves operating on the basis of the elastic-load principle, the function of the massive element is performed by a suitably pre-loaded spring.

The constant-weight operating valves are simple, cheap and reliable, and -- except for the cleaning to be carried out when the cooker is washed -- they can be regarded as at all maintenance-free. However, the structure of such valves does not allow the value of maximum pressure reached inside the cooker to be varied, but -- possibly -- replacing the massive element with another one, having a suitably different weight. However, in that case each cooker should be fitted out with a full set of massive elements, with all of the relevant drawbacks.

On the contrary, the operating valves working on the elastic-load principle enable the value of maximum pressure reached inside the cooker to be easily varied, by simply increasing the pre-load applied to the spring.

However, such valves are more complex and expensive that the constant-weight ones; furthermore, they require to be checked from time to time for the elastic characteristics of their spring, which is exposed to both mechanical and thermal stresses.

Therefore, it clearly appears that the elastic-load valves are much more subject to operating anomalies than the constant-weight valves are.

The purpose of the present invention consists of providing a valve which is capable of obviating all of the drawbacks which affect both of the valve types known from the prior art, without however renouncing to the advantages of each of them.

Such a purpose is achieved by an operating valve for pressure cookers comprising a body through which an axial duct runs, which connects the interior of the cooker with the external environment, and a shutter actuated by gravity and acting on said duct, characterized in that said shutter comprises a first seal seating and a second seal seating cooperating in order to close the valve respectively, and alternatively, with a third seal seating and a fourth seal seating provided in the duct inside the valve body, with the technical section of said first and third seal seatings being of different surface-area as compared to the technical section of said second and fourth seal seatings. The invention is illustrated for merely exemplifying, non-limitative, purposes in the figures of the thereto attached drawing tables.

Figure 1 shows a sectional view of an operating valve for pressure cookers according to the instant finding, illustrated in its "closed" position and so adjusted as to open when the pressure inside the cooker reaches its maximum value;

Figure 2 shows a sectional view similar to the view of Figure 1, in which the valve is so adjusted as to open when the pressure inside the cooker reaches its minimum value;

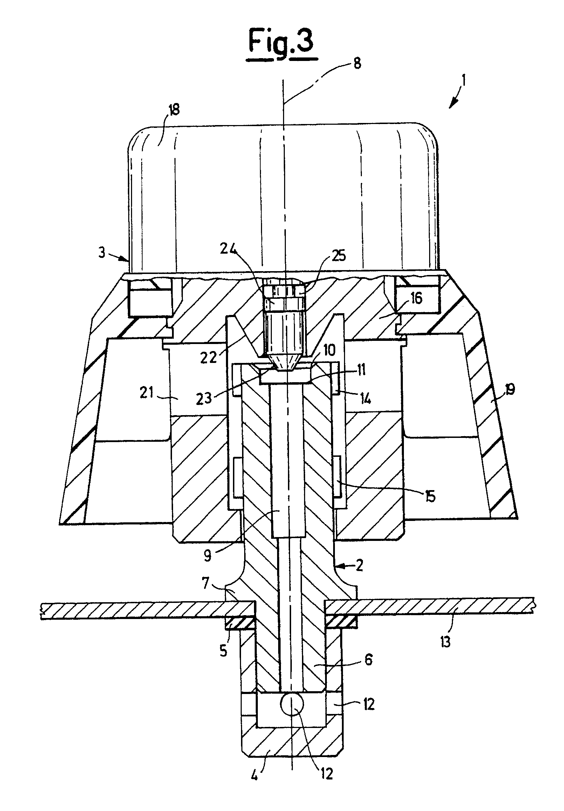

Figure 3 shows a partially sectional view of the valve, shown in its "open" position.

Referring to the above mentioned figures, the valve according to the instant finding, generally indicated with the reference numeral 1, comprises a body 2 and a shutter 3, lined-up according to a main axis, i.e., the axis of the valve 8. The valve body 2 comprises a nut 4, a gasket 5, a mount 6, a support 7, an axial duct 9, a third seal seating 10 and a fourth seal seating 11, and finally a first screw-threading 14 and a second screw-threading 15. The nut 4 is provided with bores 12 communicating with the axial duct 9, and makes it possible the valve body 2 to be fastened to , e.g., the cooker lid 13, by cooperating with the support 7.

The shutter 3 comprises a massive element 10, a pin 17, a handle 18, and a baffle 19.

The massive element 16 is connected with the valve body 2 through the first screw-threading 14 and the second screw-threading 15, which are provided, coaxial with, and at all separate from, each other, inside the valve body 2.

Such a structure constitutes a safety element in that it prevents the shutter 3 from being accidentally disengaged from the valve body 2.

In fact, in order to separate the massive element 16 or, better, the shutter 3 from the valve body 2, one should lift and simultaneously rotate twice said shutter; which, when is in its operating position, freely rotates around the valve body 2 without engaging the threadeings 14 and 15. The massive element 16 comprises apertures 21, a first seal seating 22 and a screw-threading 20. When the valve is in its "open" position, the apertures 21 are into communication with the axial duct 9, enabling the excess water vapour to be discharged to the atmosphere.

The screw-threading 20 enables the massive element 16 to get into engagement with the handle 18 to which the pin 17 is constrained. The pin 17 is provided with a second seal seating 23 and is coaxially housed, with possibility of axially sliding along the axis 8 of the valve, inside the massive element 16. The adjustment of the axial position of the pin 17, and consequently of the second seal seating 23 relatively to the fourth seal seating 11, is obtained by rotating -- thanks to the screw-threading 20 -- the handle 18 relatively to the same massive element 16.

The baffle 19 is constrained to the massive element 16 and obliges the water vapour contained inside the cooker, and which escapes through the apertures 21 when the valve is opened, to flow downwards. In that way, anyone who might incautiously approach the valve while the latter is operating, is prevented from suffering accidental burns.

The pin 17 furthermore comprises a sealing band 24 and a relevant sealing chamber 25.

During the use of the pressure cooker, the valve 1 can be so adjusted as to open at a maximum pressure or at a minimum pressure, by varying the axial position of the pin 17 inside the massive element 16 and hence relatively to the valve body 2.

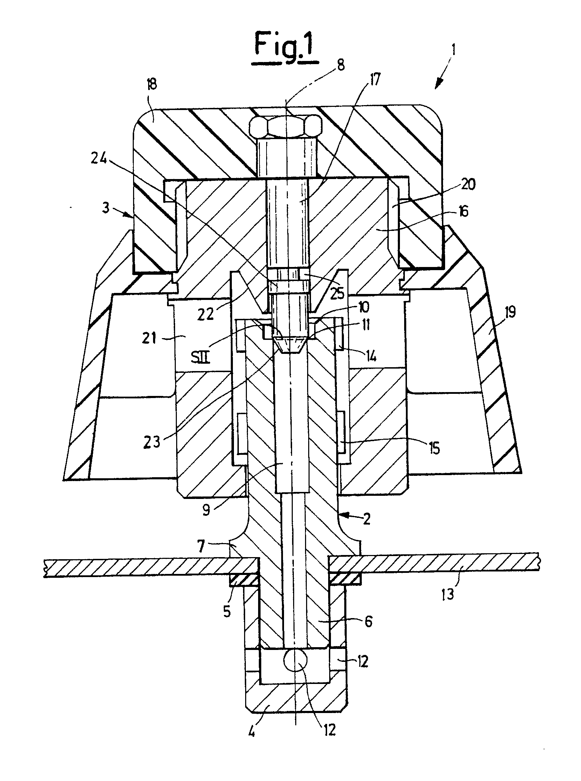

In Figure 1, the valve is so adjusted as to cause the maximum pressure to be established inside the pressure cooker. In fact, the second seal seating 23 cooperates with the fourth seal seating 11, such as to close the valve 1 generating a surface area, viz. a technical section $S_{II}$, of minimum value, to which the pressure P is applied.

The pressure existing inside the duct 9, which is identical to the pressure existing inside the cooker, acts in the direction of lifting the pin 17 and therefore opening the valve 1 with a force $F_1$ equal to the value of pressure P inside the cooker times the technical section $S_{II}$ of the second seal seating

$$F_1 = P \times S_{II}$$

Said "H" the weight of the shutter 3, the condition for the valve to open shall be

$$F_1 > H$$
i.e.,
$$P \times S_{II} > H.$$

From the above relation, one will note that with the weight H being the same, in order to lift the same weight H with lower values of pressure P, increasing $S_{II}$ is enough.

Therefore, when the technical section of the shutter is varied, a change occurs in the pressure inside the cooker, and therefore in the temperature of the liquid contained inside said cooker.

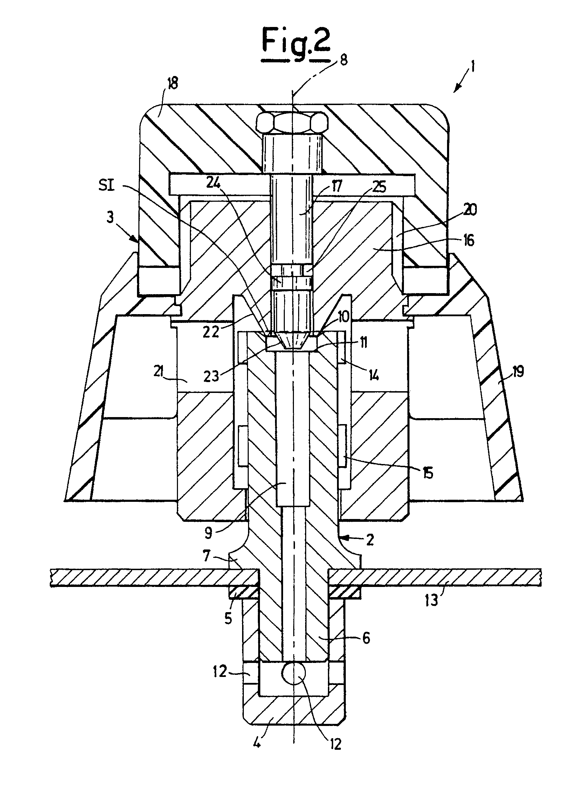

By turning the handle 18, such as to vary the axial position of the pin 17 up to completely exclude it, the valve, in its "closed" position, takes the configuration shown in Figure 2.

In such case, the closing of the valve 1 is obtained by means of the interaction of the first seal seating 22 with the third seal seating 10, which define the technical section $S_I$.

The technical section $S_I$ is larger than the technical section $S_{II}$, i.e., $S_I > S_{II}$, so that, inasmuch as H is constant, the valve 1 opens for lower pressures P inside the cooker and therefore the liquid contained inside the cooker can only reach lower temperatures than it would do in the event that the valve 1 was adjusted as shown in Figure 1.

By arranging the pin on intermediate axial positions, a technical section $S_i$ is generated, whose surface-area is intermediate between $S_I$ and $S_{II}$ (unfortunately, such intermediate technical sections cannot be clearly shown on the drawings). The maximum pressure value -- and hence the maximum temperature value which can be reached inside the cooker during the cooking will consequently vary.

A suitable scale (not visible) can be reported between the handle 18 and the baffle 19, so as to enable the user to easily select the desired cooking temperature, by simply turning the handle 18 relatively to the massive element 16, while firmly holding the latter by means of the baffle 19, which is integral with it.

The valve 1 is structurally simple, is reliable, and is cheap to manufacture, like all of the constant-weight valves, and furthermore it enables the user to establish any desired pressure values inside the interior of the cooker, in that it can be easily adjusted, in the same way as the elastic-load valves do.

Inasmuch as the inner cooker pressure and therefore the obtained temperature can be regulated within a wide enough range of values without the weight of the massive element 16 having to be varied, fitting out each valve with a plurality of massive elements of different weights is no longer necessary (it is anyway possible).

## Claims

1. Operating valve (1) for pressure cookers comprising a body (2) through which an axial duct (9) runs, which axial duct connects the interior of the cooker with the external environment, and a shutter (3) actuated by gravity and acting on said duct (9), characterized in that said shutter (3) comprises a first seal seating (22) and a second seal seating (23) cooperating in order to close the valve (1) respectively, and alternatively, with a third seal seating (10) and a fourth seal seating (11) provided in the duct (9) inside body (2) of the valve (1), with the technical section ($S_I$) of said first (22) and third (10) seal seatings being of different surface-area as compared to the technical section ($S_{II}$) of said second (23) and fourth (11) seating seals.

2. Valve according to claim 1, characterized in that the first (22), second (23), third (10) and fourth (11) seal seatings are all coaxial relatively to a main axis (8) of the valve (1), with said first seal seating (22) being housed on a massive element (16) of the shutter (3), said second seal seating (23) being concentric with the first one (22) and being housed on the end of a pin (17) whose position can be adjusted relatively to said massive element (16), with the second (23) and the third (10) seal seatings being also concentric and housed on the valve body (2).

3. Valve according to claim 1, characterized in that the massive element (16) is associated with a truncated-cone-shaped baffle (19) which deviates downwards the stream of water vapour exiting the valve (1) through the apertures (21).

4. Valve according to claim 2, characterized in that the pin (17) comprises a sealing band (24) and a sealing chamber (25).

5. Valve according to claim 1, characterized in that the shutter (3) and the valve body (2) are constrained by means of a first screw-threading (14) and a second screw-threading (15), which screw-threadings are coaxial with, and distinct from, each other.

6. Valve according to claim 1, characterized in that it comprises a support (7), a gasket (5) and a mount (6) on which a nut (4) is screwed down in order to fasten the valve body (2) to the lid (13) of the cooker.

# Fig.1

# Fig.2

# Fig.3